# EUROPEAN PATENT SPECIFICATION

(11) **EP 1 445 521 B1**
(45) Date of publication and mention of the grant of the patent: **11.08.2010**
(21) Application number: 03104276.5
(22) Date of filing: 19.11.2003
(51) Int. Cl.: F16K 15/14

(54) **Membrane valve and second pressure reducing stage for two-stage regulators for underwater use with said valve**
Membranventil und ausgestattete zweite Stufe eines zweistufigen Atemgeräts für Unterwassereinsatz mit solchem Ventil
Soupape à membrane et régulateur à deuxième étage pour un appareil de respiration à deux étages destiné à une utilisation sous-marine et pourvu d'une telle soupape

(30) Priority: 04.02.2003 IT SV20030003
(43) Date of publication of application: 11.08.2004
(60) Divisional application: 09151503.1
(73) Proprietor: SCUBAPRO EUROPE S.r.l., I-16030 Casarza Ligure (GE) (IT)
(72) Inventor: Semeia, Roberto, Dr., 16033, Lavagna (Genova) (IT)
(74) Representative: Karaghiosoff, Giorgio Alessandro

(56) References cited:
- GB-A- 1 351 384
- US-A- 1 867 478
- US-A- 2 693 180
- US-A- 4 414 973
- US-A- 4 729 401
- US-B1- 6 412 514

## Description

The invention relates to a membrane valve according to the preamble of claim 1.

Valves of this type are known and broadly used in several fields and particularly in underwater breathing apparatus, where valves are used for the air outflow for example in regulators or for the water outflow accumulating in masks and snorkels. It has been found that said valves are effective and very inexpensive. During the condition of use of said valves, the shutter disk closes the passage between a chamber whose pressure is lower than the external pressure and it is subjected to the action of the external pressure that exerts the sealing pressure of the shutter disk against the valve seat. Inside the chamber pressure peaks voluntarily generated or provided for various reasons operate in contrast with the external pressure on the shutter disk and when such pressure is exceeded by the said inside pressure peaks, the disk lifts while allowing the flux outflow from the chamber.

The document US 1, 867, 478 describes a non return valve for breathing appliances in which the opening of the anular valve seat is traversed by a cross-stay and in which a an elastic diaphragm is held in place on the cross-stay by the aid of a clamping bar.

The clamping bar is fixed to the valve by screws, lying outside the diaphragm.

The diaphragm in its closed position is bore against the cross stay through its full length.

The document US 6, 412, 514 describes a check valve for placement in a fluid conduct. The check valve comprises an inlet body half connected to an oulet body half. Any fluid that enters the inlet body half must encounter a separator element. A pliant sealing member is attached to the center of the separator element via a retaining bar which is secured to the separator element by a retaining nut, fastening the pliant sealing member at its center to the separator element. The retaining bar may comprise three or four arms extending centrally from the pliant sealing member. The retaining bar prevents the pliant sealing member from flipping and remaining in the open position due to the gravity.

While these known valves excellently carry out the above function, the shutter disk behaviour is not yet optimum whereby valves have some malfunctions. Particularly current membrane valves have a perfect circular and coaxial shape with respect to the fastening pin. When an overpressure occurs inside a chamber provided with a membrane valve of this known type, the shutter disk aims to inflate before lifting from the valve seat, thus at least partially compensating the pressure peak by the elastic deformation. This effect has been found also in shutter disks having a cup or trapezoidal cross section, with a peripheral, continuous conical sealing lip.

The partial absorption of pressure peak inside the chamber, i.e. on the valve side generally at lower pressure, makes difficult the calibration of opening pressure thereof, whereby it is not possible to provide a precise automatic outflow overpressure. Moreover, particularly in underwater breathing apparatus, as second reduction stage of regulators or snorkels or even masks having membrane outflow valves, the elastic swelling effect of the shutter disk provides a greater effort for the user. Hence, in all the above devices the internal overpressure is generated by a voluntary blowing act of the user, as in the case of snorkel or mask, or the overpressure is a result of a physiological activity for example the normal expiration phase such as in second stages of underwater breathing apparatus. Particularly in this latter case, the greater effort for opening the outflow valve is particularly annoying because it is connected to a continuous activity and the user is required to have a greater effort and a lower comfort and simplicity in doing the normal breathing action.

Moreover, the elastic deformation behaviour of the shutter disk, provides the fact that when the pressure in opening direction is enough for opening the shutter disk, the lifting of the disk or of the sealing lip thereof is shared in a uniform or substantially uniform manner on the whole circumference and the opening gap between the shutter disk and the valve seat is relatively thin. Therefore, the outflow flux is not free but it is subjected to a certain strength due to the passage that is quite thin between the valve seat and the shutter disk.

The invention aims to provide a membrane outflow valve as described at the beginning that, by means of simple and cheap arrangements, can obviate the above drawbacks guaranteeing a greater opening precision with reference to pressure conditions acting on the shutter disk in the opening direction of the valve and a greater section of the outflow passage when the valves opens.

The invention attains the above purposes by a membrane valve according to the preamble of claim 1 and further comprising the combination of features of the caracterizing part of claim 1.

The lines or bands defined in the characterising part of claim 1 can be arranged symmetrically with respect to a parallel median or diametral axis of the shutter disk or also asymmetrically, for example one on a side and the other on the opposite side or also both on a single side with respect to a parallel to the median or diametral axis of the shutter disk.

By means of these retaining means, when the pressure exerts in the opening direction the elastic swelling deformation of the shutter disk is prevented and moreover a kind of hinge line is formed between the portions of the shutter disk separated by the lines or the bands along which the retaining means operate. With the opening said portions lift with an oscillating movement around an axis that substantially coincides with the lines or the bands along which operate the retaining means on the shutter disk. Such movement allows to obtain flux passage sections, in the lifted condition of the shutter disk from the valve seat, that are greater than those obtainable in operation conditions of the known membrane valves.

Moreover, by acting on the width of the secant band along which the retaining means operate it is possible to calibrate in a precise way the threshold pressure that cause the opening of the valve.

Therefore it is possible also to provide different configurations of the retaining means with relation to the retaining function.

It is also possible to provide retaining means that are realized in such a way to cooperate in a continuous or discontinuous way with the shutter disk, i.e. remaining in contact with the shutter disk for the whole line or secant band or coming into contact for sections spaced one from the other of said secant line or band.

Retaining means can be composed of stop ribs resting along said secant lines or said bands against the side of the shutter disk opposite to the valve seat or of rows of stop pins fabricated similarly to the clamping pin that generally is formed of a central appendix of the shutter disk and clamped by means of elastic shrinkage in a hole of a hub of the valve seat.

It is possible to provide also in conjunction a stop rib and a row of stop pins extending along various lines or various bands which are secant to the shutter disk.

Other particular embodiments will be described below in more details and they are object of the dependent claims.

According to an improvement of the invention, in conjunction with the retaining means operating along two secant lines or bands, it is possible to provide as a further advantageous feature the fact that with respect to the clamping pin and/or the clamping hole thereof, at least the shutter disk and/or the valve seat have a non-circular shape or a shape which is not inscribable in a circle.

In this case it is advantageous that retaining means extend along a straight line coincident with the clamping pin and/or the clamping hole thereof.

It is possible to provide that at least the shutter disk and/or the valve seat have a rotational asymmetrical shape with respect to the clamping pin and/or the clamping hole thereof, that is the clamping pin and/or the clamping hole thereof have an eccentric location with respect to the shutter disk and to the valve seat.

According to a further advantageous feature, on the contrary at least the shutter disk and/or the valve seat have a rotational symmetrical shape with respect to the clamping pin and/or the clamping hole thereof.

Particularly, at least the shutter disk and/or the valve seat have an symmetrically or asymmetrically elongate shape in two directions diametrically opposed with reference to the clamping pin and/or the clamping hole thereof and which directions can be at least transversal, particularly perpendicular to at least a line or at least to a band along which the retaining means operate.

A more specific embodiment provides that the shutter disk have an elliptical, oval shape or similar shape, the lines or bands along which operate the retaining means being oriented according to the minor axis of the shutter disk and/or of the valve seat.

When it should be useful or functional, naturally the invention provides also the opportunity to manufacture the shutter disk and/or the valve seat in such a way so that they have peripheral symmetric or asymmetric extension lobes with respect to both lines and bands along which the retaining means operate and/or with respect to the clamping pin and/or the clamping hole thereof.

The elongation of the shutter disk and/or of the valve seat in a transversal or perpendicular direction to the hinge line of the portions of the disk that are defined by the retaining means guarantees firstly the fact to have a greater section for the outlet passage of the flux in opened condition of the membrane valve. Considering equal the oscillation angle in a direction departing from the valve seat, the distance between the peripheral edge of the shutter disk at the end more distant from both the lines or bands along which the retaining means operate, becomes greater as it becomes greater the distance of said peripheral edge from both the lines and bands along which the retaining means operate.

It will be noted that the valve according to the embodiment of the invention with circular geometrical shutter disk or with elongate shutter disk have a further functional characteristic that, as will be noted below, provides great functional advantages particularly in second stages of underwater breathing apparatus. Hence, the valve opening mode with the shutter disk bending as a book with its two half directed in a departing direction from the valve seat provides, as already described above, that the greatest opening section is at the area of the peripheral edges of the shutter disk more distant from both the lines or bands along which the retaining means operate and it reduces step by step towards said lines or bands. This causes a kind of directional effect on the output flux from the membrane valve.

In a second reducing stage of a underwater breathing apparatus, of the type comprising a chamber for supplying a gas or a gas mixture, that can be breath by means of a mouthpiece communicating with said chamber, which chamber has an inlet connected with a first pressure reducing stage that is connected with a breathable gas or gas mixture source at high pressure, particularly a bottle, by means of a valve that can be operated in the opening direction by the inspiration depression and in the closing direction by means of the pressing of a closing spring and which chamber has in a wall separating said chamber with the outside at least a valve for the outflow of air that has been breathed out, the use of the membrane valve according to the present invention of one or more of the variations described above and according to one or more variations of the following specification provides firstly the advantage to reduce the effort that is necessary for the outflow of the breathed out air through the membrane valve. The strength of the device for the respiration is reduced by making the respiration less hard, smoother and closer to the one of a normal environment by means of said second stage.

Moreover, it should be considered that outflow valves in said second stages are arranged in an area that is lower than the mouthpiece whereby to prevent the creation of bubbles in front of the face that can firmly prevent a clear vision, the valve is located in a transversal outflow duct whose outlet orifices are provided at the two sides of the mouth and/or chin in an laterally offset position such that the gas is deviated from the normal vision area that in this case is delimited by the view angle permitted by the underwater mask.

In this situation, the fact of providing shutter disks and/or valve seats that are elongated perpendicular to both the lines and bands along which the retaining means operate and in the direction of the outflow duct axis allows to direct the breathed out air outflow towards the corresponding outlet orifices of the outflow duct itself, in addition also to the fact of approaching the opening area of the valves to said outflow orifices of said outflow duct. All this considerably improves the ease and the effort of breathing out making the user breathing out period closer to the natural condition.

The outflow duct provides the advantageous possibility of fabricating retaining means in the shape of a stop rib that may be formed as transversal wall departing from the internal wall of said duct opposed to the shutter disk.

Such transversal wall constitutes also a component for extinguishing possible flux flows inside the outflow duct that can cause the lifting of the shutter disk. The extinguishing act of the flux flow through the outflow duct from one outlet orifice to the opposite outlet orifice, provided to avoid the lifting of the shutter disk, obviously cooperates with the stop rib that obviously operates to retain the shutter disk against the valve seat at least along the band for adhering said rib to said shutter disk.

Further improvements of the invention are object of the dependent claims.

The invention will appear more clearly from the following description of some non-limiting embodiments shown in the annexed drawings, in which:
Figs. 1 to 3 show membrane valve behaviour according to prior art.
Figs. 4 and 5 are a perspective view of a shutter disk in closing and opening condition according to the prior art.
Fig. 6 is a lower side view of a second stage with reference to the position of use thereof by a user in a vertical position.
Fig. 7 is a cross-sectional view through a plane containing the axis of the clamping pin of the shutter disk of a valve for the outflow of breathed out air in a second reduction stage of an underwater regulator according to the present invention, particularly taken along the line VIII-VIII of fig. 8.
Fig. 8 is a view on the valve seat of the second stage of fig. 6 in direction of the axis of said valve seat, the removable part of the outflow duct leading the stop rib being omitted.
Figs. 9 to 11 are various views on the removable part of the outflow duct coinciding with the outflow valve according to the preceding figures 6 to 8.
Figs. 12A and 12B to 17A and 17B are respectively a perspective view and a corresponding plant view wherein the passage opening of the valve seat of various variation embodiments is indicated by discontinuous lines. The embodiments of the invention are shown in figures 14a, 14b, 17a, and 17b.

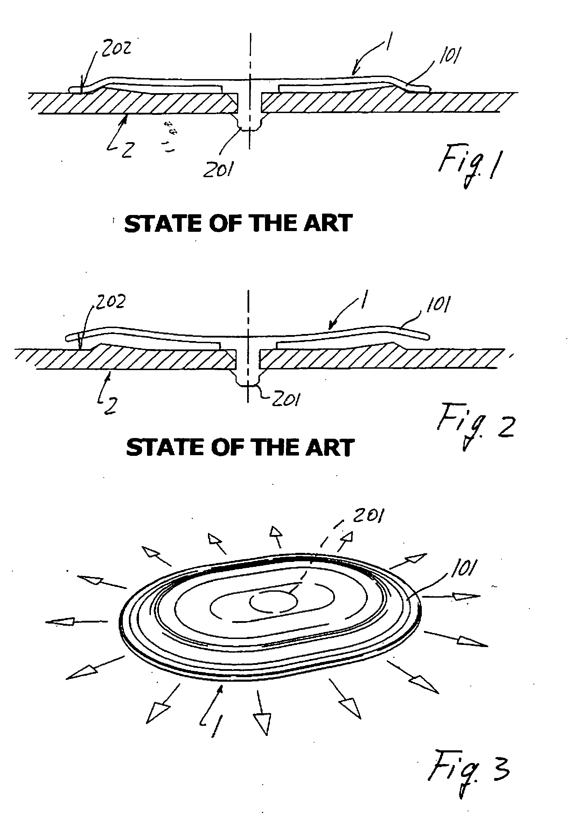

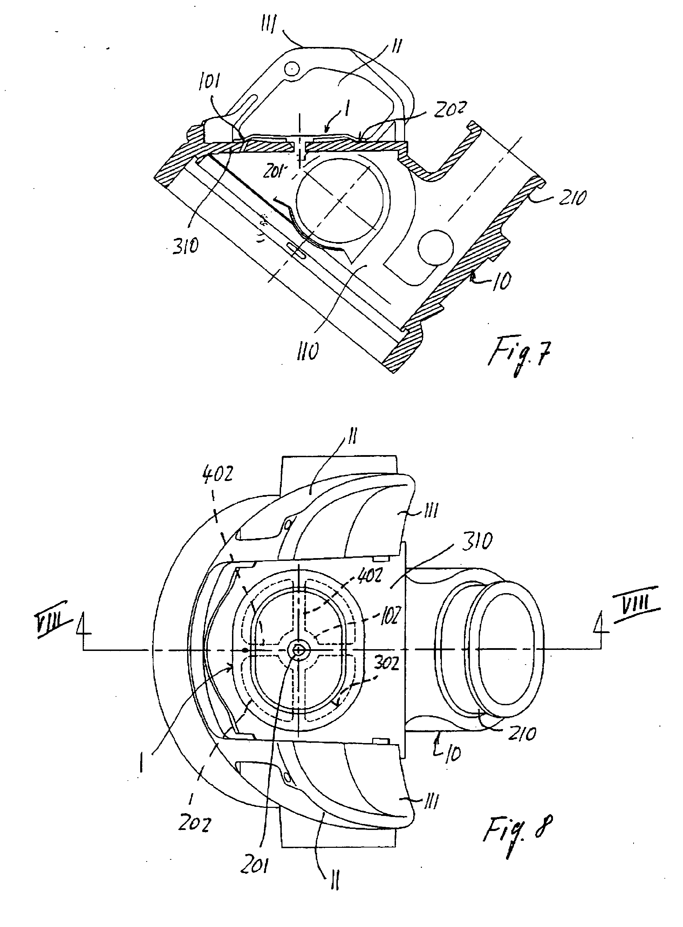

Figs. 1 and 2 show a membrane valve according to the current prior art. The membrane valve comprises a shutter disk 1 cup-shaped, having a central circular flat portion and a conic peripheral sealing lip 101. As it appears also from the following figures 8 and 12 to 17, the membrane is fixed to the valve seat 2 by means of a central pin 201 elastically engaging in a central clamping hole realized in a hub 102 of a circular valve seat 2. The sealing lip 101 of the shutter disk 1 cooperates with a circular wall 202 of the valve seat circumscribing an opening 302. This is divided by radial bridges supporting the hub 102.

As it appears evident from the figures, in the case of an overpressure on the side of the valve seat opposite to that of the shutter disk, the shutter disk is deformed in such a way as to lift the peripheral sealing lip 101 from the annular circular wall 202 of the valve seat causing the opening of the valve. The deformation of the shutter disk 1 when it opens for the outflow of internal pressure is illustrated in figure 2. It can be noticed that the overpressure causes not only the lifting of the peripheral sealing lip 101 but it provides a sort of elastic swelling of the shutter disk that causes a fall of the overpressure efficaciously operating for the lifting, a part of the overpressure being absorbed by the elastic deformation of the shutter disk.

Moreover the figure 2 shows how the lifting of the sealing lip 101 of the shutter disk 1 is substantially uniform along the whole perimeter of the shutter disk 1 and also how such lifting causes only a thin passage gap between the circular wall 202 of the valve seat 2 with which cooperates the peripheral sealing lip 101 of the shutter disk 1.

Figure 3 shows a variation of known membrane valves wherein an elongate-shaped shutter disk is provided. In such case, the known shutter disk has two clamping pins provided in focus or centres respectively of the two arched ends. While such arrangement increases the outflow section by means of the greater external length of the sealing lip, it has no influence as regards an improvement of the deformation effect that occurs in membranes valves with circular shutter disk as described before, on the contrary, the area interposed between the two clamping pins is much more sensitive to a swelling elastic deformation hence operating in the opposite direction to a removing of the aforementioned drawback.

For simplicity reasons in figure 3 it has been omitted the valve seat that has a shape similar to that of the shutter disk according to what mentioned before, the annular surface 202 forming the valve seat being coincident with the sealing lip 101 of the shutter disk 1 and so being of a corresponding plant shape.

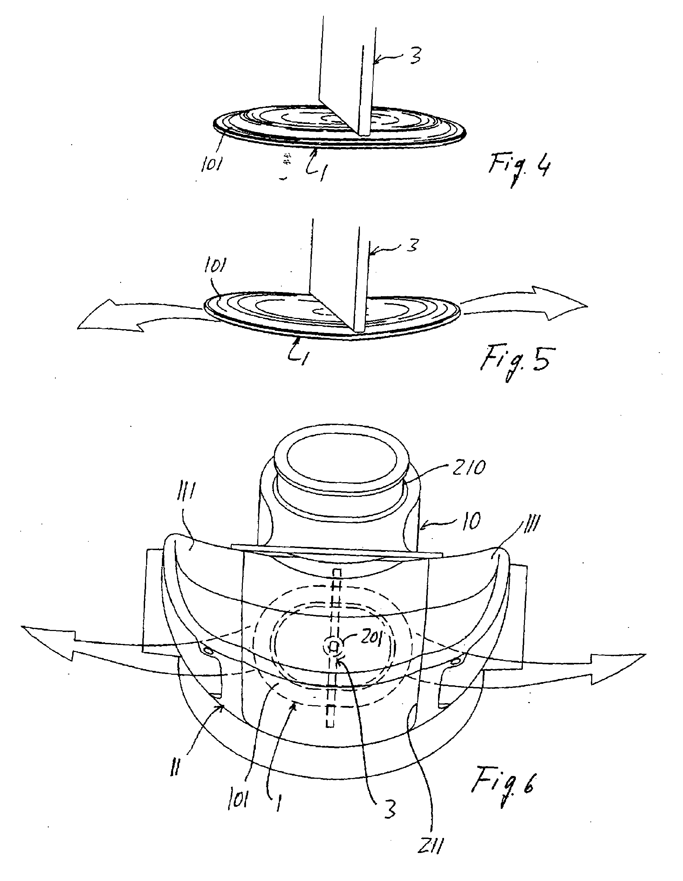

In the example of figures 4 and 5 according to the prior art a diametral transversal rib 3 is provided in contact with the outside surface of the shutter disk 1. Preferably, the contact position is such that the rib touches or laps the outside surface of the shutter disk 1 without determining a pressure thereon in closing position of the membrane valve.

The stop RIBS 3 may have any thickness at the edge 103 in contact with the shutter disk 1. Such contact edge 103 may be tapered and it has a rounded tip such that it does not engrave or damage the shutter disk 1.

A variation of the contact surface length between the RIBS 3 and the shutter disk causes a modification in the opening behaviour of the valve with reference to a overpressure operating in the opening direction thereof on the shutter disk 1. In this way, it is possible in an experimental way to calibrate the outflow valve referring to a predetermined opening overpressure thereof. Such calibration may be executed in an experimental way.

Referring to the operation of the membrane valve according to the invention, the stop RIBS 3 on one hand avoid or limit in a drastic way the partial swelling deformation of the shutter disk when occurs an opening overpressure, on the other hand it causes an opening behaviour of the valve according to which the shutter disk lifts as if the two portions thereof defined by the area in contact with the stop RIBS 3 are hinged one with respect to the other. Such opening behaviour is shown in figure 3.

As it is immediately evident from figure 3, in addition to eliminate or limit the swelling deformation effect of the shutter disk, the substantially book-like opening thereof causes an increase of the passage section, because at the two areas of the shutter disk opposite to each side of the stop RIBS 3 the lifting of the shutter disk 1 and/or the sealing lip 101 from the corresponding portion of the valve seat is greater than the case of prior art shutter disks, so that the light or passage section is greater.

According to a further feature that is illustrated in figure 3, the shutter disk 1 may have a shape different from the circular shape provided in prior art and particularly an elongate shape in the transversal direction of the stop RIBS 3, on one or both sides of said stop rib 3.

The plant shape of the shutter disk may be of any type and as already described before said shape may be completely asymmetrical with relation to the axis defined by the pin 201 for clamping the shutter disk 1 to the valve seat.

However, preferably the plant shape of the shutter disk 1 is symmetrical at least with reference to the stop RIBS 3 or it is rotational symmetrical with reference to the axis of the clamping pin 201.

Among the possible plant shapes the elliptic, oval shapes or elongate shapes having semicircular head segments joined by straight or arched perimeter lines are preferred.

In such case, the stop RIBS 3 is oriented according to the minor axis and perpendicular to the major axis and as well as it is coincident with the axis of the central clamping pin 201.

Advantageously even the valve seat is fabricated with a shape corresponding to that of the shutter disk.

Since the shutter disk shape may be asymmetrical with respect to the stop RIBS 3, said RIBS may be provided to be coincident with the axis of a clamping pin 201 or in a position laterally offset with respect to this one.

It is possible to provide a great amount of constructive variations.

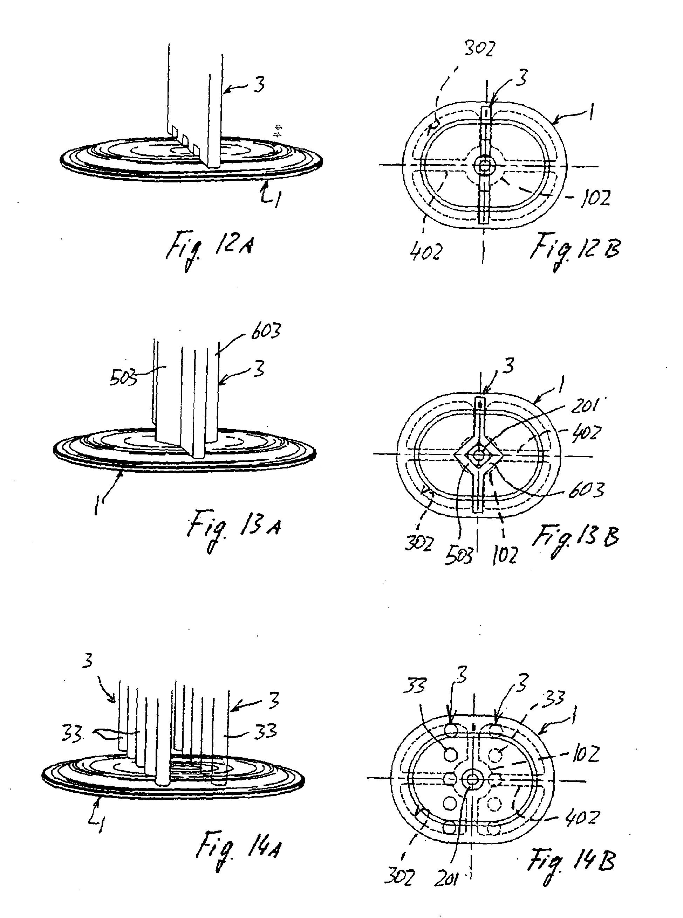

In figure 12 to 17, some of the possible variations are shown respectively A and B, without having a limiting sense.

Figs. 12A and 12B show a perspective view and a plant one of a valve according to prior art

In such case, the stop RIBS 3 adheres against the shutter disk 1 in a discontinuous way, said RIBS being toothed manufactured at least at the end in contact with the shutter disk.

Referring to figs. 13A and 13B, the stop rib 3 branches at the area between the clamping pin 201 and the shutter disk 1 surrounding it and having two branches 503, 603 extending at first in diverging directions and then in converging directions one with respect to the other and joining again in a single branch of the rib comprising therebetween the base for coupling the clamping pin 201 to the shutter disk. In the example the arrangement is polygonal, however it may be even curvilinear.

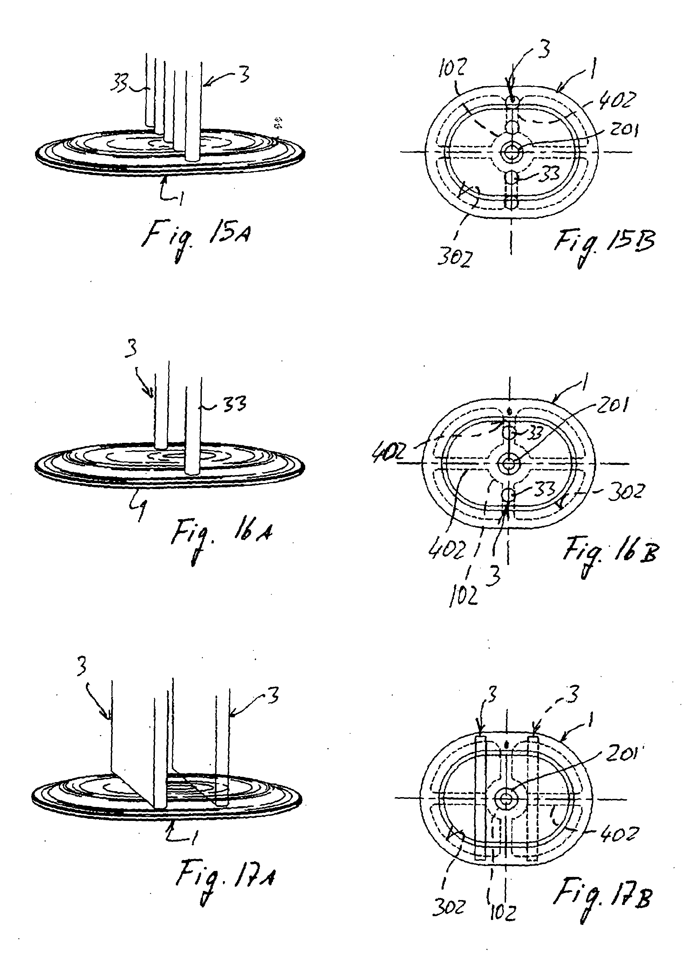

Figs. 15A and 15B show a further variation of the embodiment according to figs. 12A and 12B wherein the stop rib with toothed contact end is replaced by a row of rod-shaped members spaced one with respect to the other.

As indicated in figs. 16A and 16B the number of said components may be varied depending on the desired behaviour of the valve and/or material therefrom the shutter disk is made of.

Figs. 14A and 14B and figs. 17A and 17B show two embodiments according to the invention consisting in providing two stop ribs 3 or two rows of retaining rods 33.

In such case the two stop ribs 3, that can be even toothed fabricated analogously to the embodiment of fig. 12, extend on two sides of a minor median axis coincident with the axis of the clamping pin 201 hence with a perfectly symmetrical arrangement.

However, the arrangement may be even asymmetrical with respect to said minor median axis, the two stop ribs 3 or the row of retaining rods 33 being arranged one on a side and the other on the opposite side of said minor median axis, or the two stop ribs 3 or the two retaining rods 33 may be arranged at a predetermined distance one from the other on a single side of said minor median axis.

It should be noticed that, while all said embodiments are described and illustrated in figs. 12 to 17 in conjunction with an elongate shutter disk having symmetrical shape with respect to the clamping pin, however it is possible to provide a shutter disk with a asymmetrical shape with respect to said clamping pin 201 or an eccentric arrangement of clamping pin 201 with respect to a shutter disk 1 having a plant shape with predetermined rotational or specular symmetries.

Analogously even the embodiments of figs. 12 to 17 may be applied to shutter disks of circular shape having a clamping pin provided alternatively in concentric position and in eccentric position.

Generally, the above principle of the present invention may be applied also to known membrane valves having an elongate shape and two clamping pins substantially arranged coincident with the centres of the elongate shape. In such case, ribs and/or the retaining rods may have several arrangements corresponding to the embodiments described before and illustrated with reference to elongate shutter disks having a single clamping pin.

In addition to the above embodiments and eventually in conjunction or in alternative thereto, the effect of stop ribs and/or rows of stop rods 33 may be achieved even by providing on the side of the shutter disk facing the valve seat another row of clamping pins cooperating with as many engaging holes of a traverse of the valve seat that divides the passage opening in at least two portions.

Obviously, with the two stop ribs 3 or two rows of stop rods 33b it is possible to provide, alternatively or in combination, two rows of clamping pins of the shutter disk aligned along directions coincident to that provided for stop ribs and/or rows of stop rods.

Even in this case all the above configurations are possible with reference to various embodiments.

An advantageous and particularly simple shape is the one providing that the row of clamping pins includes even the clamping pin 201.

With two stop ribs 3 or two rows of stop rods 33 or two rows of clamping pins it is even possible to replace one of the ribs with a row of retaining rods or with a row of clamping pins and vice-versa, all the possible arrangements being provided.

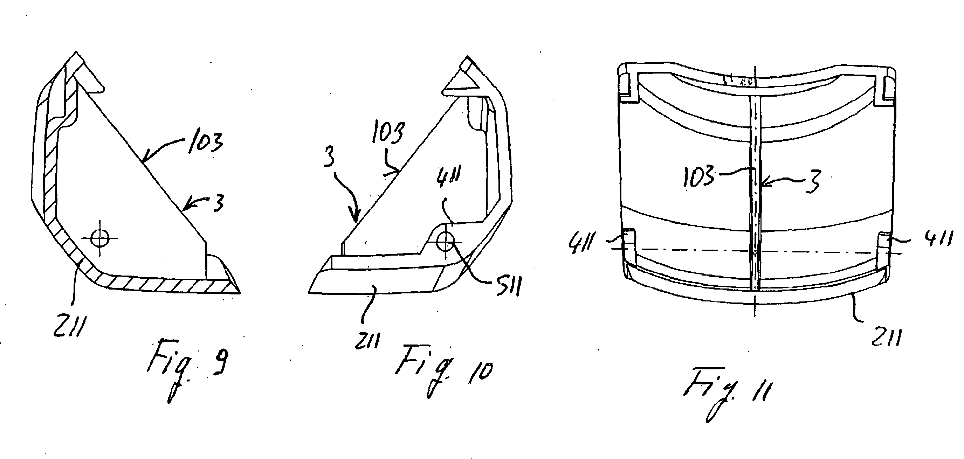

Figs. 5 to 11 show a particular application of the membrane valve. In such case, said membrane valve is used as outflow valve for the air breathed out by the user in a second reducing stage of an air breathing apparatus for underwater diving.

For shortness and clearness purposes, the illustrated embodiment provides a membrane valve with symmetric configuration, a single central clamping pin and a stop rib 3 in a position coincident with the minor axis coincident with the clamping pin 201. it is possible to combine with the second reducing stage a membrane valve according to any of the several variations that have been illustrated and/or described above.

The example of figs. 5 to 11 provides a second reducing stage with a case 10 delimiting a chamber for supplying air to be breath in or out by the user. The air is breathed in by the supply chamber 110 and breathed out therein by means of a mouthpiece (not shown being of a known type per se) of smooth material connected to an intake/expiration mouthpiece 210 communicating with said supply chamber 110.

In fig. 5 the second stage is shown in the position of use with the user in vertical position.

Below the area of the breath in/breath out mouthpiece 210, in a leveling 310 of the peripheral wall of the case 10, a valve seat is realized comprising the annular wall 202 sealingly in contact with the sealing peripheral lip 101 of a shutter disk. In the central area a clamping pin 201 of the shutter disk is engaged by elastic forcing in a hole.

Referring to figures 4 and 6, the valve seat has an elongate or substantially elliptic opening 302 composed of four quadrants spaced-apart by radial ribs 402 for supporting the central hub 102 wherein the central hole engaging the clamping pin 201 of the shutter disk is provided. The shutter disk 1 is illustrated by a broken line. Even the rib 3 is illustrated by a broken line.

In this case, the shutter disk has a substantially elliptic shape and cooperates, as already described above, with the surface surrounding the sectors 302 of the passage opening of the valve indicated at 202.

The shutter disk 1 is applied on the external face of the leveling 310 and such leveling is completely covered on the outside by a C-shaped element 111 composing a transversal outflow duct 11, with reference to the median axis including or parallel to the axis of the clamping pin 201 of the shutter disk 1 or to the axis of the intake/expiration mouthpiece 210 of the case 10.

The duct 11 has opened head sides and in the central area it is made as it can be opened, the central part 211 thereof being removable like a little cap. The removable part 211 of the wall of the outflow duct 11 extends substantially for the all length of the valve in the direction of the axis of the outflow duct 11 so that the removable part can be completely accessible for cleaning purposes.

As shown in figures 4 and 9 to 11, a transversal wall constituting in this case the stop rib 3 departed from the central area of said removable part 211. In placed position of said removable wall part 211 of the outflow duct 11 (see fig.6), as described above, the rib 3 adheres against the external face of the shutter disk 1 with its free edge 103.

The removable part 211 of the outflow duct 11 may be secured to the same by means of axial pins with reference to the axis of the outflow duct said pins engaging with corresponding holes 411 of corresponding ears 511 of fixed walls 111 of the outflow duct 11 and removable part 211. The fixed parts 111 of the wall of the outflow duct 11 formed the two final ends of the outflow duct 11 and the removable part 211 is interposed therebetween.

Due to what said before it is evident that the elongation of the shutter disk on the two sides with reference to the stop RIBS 3, causes a shifting of the valve passage opening in the direction of the two outflow orifices of the outflow duct 11. Therefore, the fact that the openings and the area of maximum passage light of the valve are arranged nearer to the outflow orifices of the outflow duct 11, provides, in addition to the advantage of having more passage light in the opening condition of said membrane valve, as already mentioned before, an additional improvement of outflow conditions of breathed out air, reducing the outflow strength of breathed out air. Moreover, the particular behaviour of the shutter disk 1 in the opening condition creates per se an outflow flux of said air that due to the configuration of the passage lights has a predetermined orientation in the direction of said outflow orifices of the outflow duct 11.

Thanks to these features, not only the membrane valve has a better opening behaviour and so it requires a less effort for the user than the effort that is necessary at present with the known membrane outflow valves, but the main part of the outflow flux of breath air is directed towards the outflow orifices of the outflow duct 11 and hence it has a direction that helps the air outflow from the regulator in a laterally offset position with respect to the user field of view.

## Claims

1. A membrane valve comprising:
- a shutter disk (1) of flexible elastic material cooperating with a valve seat (2) comprising at least one passage opening (302) provided in a wall (202),
- said shutter disk (1) comprises means (201) for clamping to the seat valve (2), which clamping means are engaged at least in a complementary clamping housing (102) of the valve seat (2),
- said valve seat (2) comprises a continuous surface and closed on itself which is in sealingly contact with at least a corresponding peripheral sealing lip (101) of the shutter disk (1),
- said contact surface between the valve seat (2) and the sealing lip (101) of the shutter disk (1) and said sealing lip surround at least a passage opening (302), and being provided with retaining means (3, 201) on the shutter disk, which means are located against the valve seat (2) at least along a line or a band extending along a secant of the shutter disk (1) itself
**characterised in that** said retaining means (3, 201) of the shutter disk (1) against the valve seat (2) operate along two different lines or two different bands secant the shutter disk (1) extending at least for a part of their length or for their whole length in parallel one with respect to the other.

2. A membrane valve according to claim 1 , **characterised in that** the retaining means (3, 201) of the shutter disk (1) against the valve seat (2) operate for a part of the extension along the shutter disk (1), along a single or common secant line or band and for the remaining part of the extension of the shutter disk along two different lines or bands which are secant to the shutter disk (1).

3. A membrane valve according to claims 1 or 2 , **characterised in that** the retaining means (3, 201) of the shutter disk operate on a secant line or band coincident with a median or diametral axis of the shutter disk (1).

4. A membrane valve according to claims 1 or 2 , **characterised in that** retaining means (3, 201) of the shutter disk (1) operate on a secant line or band coincident with an axis that is laterally offset with respect to a parallel median or diametral axis of the shutter disk.

5. A membrane valve according to claims 1 or 2 , **characterised in that** the retaining means (3, 201) of the shutter disk operate on two different secant lines or bands that are arranged symmetrically with respect to a parallel median or diametral axis of the shutter disk (1).

6. A membrane valve according to claims 1 or 2 , **characterised in that** the retaining means (3, 201) of the shutter disk operate on two different secant lines or bands that are asymmetrically arranged the one on a side and the other one on the opposite side or both on a single side with respect to a parallel median or diametral axis of the shutter disk (1).

7. A membrane valve according to one or more of the preceding claims, **characterised in that** the retaining means (3, 201) of the shutter disk (1) cooperate in a continuous or discontinuous way with the shutter disk (1).

8. A valve according to one or more of the preceding claims, **characterised in that** the retaining means are composed of a stop rib (3), which rib (3), in the close condition of the valve, rests without pressing against the side of the shutter disk opposite to the valve seat (2).

9. A valve according to claim 8, **characterised in that** the stop rib (3) has a resting edge, which resting edge of the stop rib (3) cooperates with the shutter disk (1) and is continuous or discontinuous, comb or toothed shaped.

10. A valve according to one or more of the preceding claims, **characterised in that** the shutter disk has at least a central clamping pin (201) that can be engaged by elastic forcing into a corresponding housing hole in a central hub (102) of the valve seat, the stop rib being oriented with the surface in contact with the shutter disk (1) extending along a line or a band intersecting with the axis of said clamping pin (201) or laterally offset with respect to said line or band intersecting with the axis of said clamping pin (201).

11. A membrane valve according to claims 8 and 10, **characterised in that** it has at least two clamping pins spaced one with respect to the other, the stop rib being oriented with the surface in contact with the shutter disk (1) extending along a line or a band transversal or orthogonal with respect to the ideal straight line that joins the axis of the two clamping pins.

12. A membrane valve according to claims 8 and 10, **characterised in that** it has at least two clamping pins spaced one from the other, the stop rib being oriented with the surface in contact with the shutter disk (1) extending along a line or a band coincident or parallel with respect to the ideal straight line that join the axis of the two clamping pins.

13. A membrane valve according to one or more of the preceding claims 8 to 12, **characterised in that** it has a stop rib (3) that at an intermediate point of its extension along the shutter disk (1) branches in at least two divergent symmetrical or asymmetrical stop rib branches.

14. A membrane valve according to claim 13, **characterised in that** the two stop rib divergent branches extend further with two convergent branches and join again in a single stop rib branch.

15. A membrane valve according to claims 10, 13 and 14, **characterised in that** the two divergent branches and the two convergent extension branches thereof surround the attachment area between the clamping pin (201) and the shutter disk (1).

16. A membrane valve according to one or more of the preceding claims 8 to 15, **characterised in that** it has two stop ribs (3, 3') parallel and spaced one with respect to the other and cooperating with the shutter disk (1) along two different secant lines or bands of the shutter disk (1) itself.

17. A membrane valve according to claims 10 and 16, **characterised in that** the two stop ribs are arranged symmetrically with respect to the clamping pin (201) of the shutter disk.

18. A membrane valve according to claim 16, **characterised in that** the two stop ribs are arranged one on a side and the other one on the opposite side of the clamping pin (201) of the shutter disk in a asymmetrical way with respect to the shutter disk.

19. A membrane valve according to claims 10 and 16, **characterised in that** the two stop ribs are both arranged on the same side of the clamping pin (201) of the shutter disk (1).

20. A membrane valve according to claim 16, **characterised in that** it comprises at least two clamping pins spaced one with respect to the other, the two stop ribs being arranged between the two clamping pins and oriented transversally or orthogonally with respect to the straight line that joins the axis thereof.

21. A membrane valve according to claim 20, **characterised in that** the two stop ribs are arranged symmetrically or asymmetrically with respect to the two clamping pins.

22. A membrane valve according to claim 16, **characterised in that** the shutter disk has two clamping pins, a stop rib being provided coincident with each of the two clamping pins.

23. A membrane valve according to claim 16, **characterised in that** it has two clamping pins, the two stop ribs being arranged parallel with respect to the straight line that joins the axis o the two clamping pins, symmetrically or asymmetrically with respect to said straight line.

24. A membrane valve according to one or more of the preceding claims 8 to 23, **characterised in that** said rib or ribs (3, 3') have a resting edge against the shutter disk, which resting edge is made thin and has a terminal not sharp corner.

25. A membrane valve according to one or more of the preceding claims 8 to 24 **characterised in that** said at least one or both stop ribs extend in contact with the shutter disk (1) in a continuous or discontinuous way for the whole extension thereof or only for a part or at partial sections of the shutter disk extension along the stop rib or ribs, the said partial sections being spaced one from the other.

26. A membrane valve according to one or more of the preceding claims 8 to 25, **characterised in that** at least one or both stop ribs are formed by a bridge being the shape of an overturned U whose terminal legs are joined to the valve body wherein the valve seat (2) is provided at points which are external with respect to said valve seat (2) and to the peripheral sealing edge of the shutter disk (1).

27. A membrane valve according to one or more of the preceding claims, **characterised in that** the retaining means are partially composed of a row of stop pins (201') departing from the shutter disk (1) and engageble or engaged in corresponding housing holes in a traverse that intersects the passage opening (302).

28. A membrane valve according to claims 10 and 27, **characterised in that** the row of stop pins (201') is coincident with the clamping pin (201) of the shutter disk (1), which clamping pin (201) constitutes one of the stop pins, the traverse that intersects the passage opening (302) of the valve seat being formed by a radial arm for supporting a central hub (102) of the valve seat wherein is provided an engaging hole of the clamping pin (201) itself.

29. A valve according to claims 10 and 27, **characterised in that** the row of stop pins (201') extend laterally offset with respect to the clamping pin (201).

30. A membrane valve according to one or more of claims 10, 27 to 29, **characterised in that** it comprises two rows of stop pins (201') arranged on parallel lines one with respect to the other and symmetrical or asymmetrical with respect to the clamping pin (201').

31. A membrane valve according to one or more of claims 10, 27 to 30, **characterised in that** it comprises two clamping pins spaced one from the other, being to each clamping pin associated at least a row or two rows of stop pins, which rows extend transversally or perpendicularly with respect to the straight line that joins the axis of the two clamping pins.

32. A membrane valve according to one of more of claims 10, 27 to 30, **characterised in that** it comprises two clamping pins spaced one from the other, one or two rows of stop pins being provided oriented parallel to the straight line that joins the axis of the two clamping pins (201).

33. A membrane valve according to one or more of the preceding claims, **characterised in that** it comprises two separated retaining means operating along two different lines or bands which are secant to the shutter disk and said retaining means being formed one by at least a stop rib and the other one by at least a row of stop pins.

34. A membrane valve according to one or more of the preceding claims 10 to 33, **characterised in that** at least the shutter disk (1) and/or the valve seat (2) have a circular shape or a shape that can be inscribed in a circle with respect to the clamping pin (201) and/or to the housing hole thereof.

35. A membrane valve according to one or more of the preceding claims 10 to 33, **characterised in that** at least the shutter disk (1) and/or the valve seat (2) have a non-circular shape or a shape that cannot be inscribed in a circle with respect to the clamping pin (201) and/or to the housing hole thereof.

36. A membrane valve according to claim 35, **characterised in that** with respect to the clamping pin (201) and/or the housing hole thereof, at least the shutter disk (1) and/or the valve seat (2) have a rotation asymmetrical shape, that is the clamping pin (201) and/or the housing hole thereof are in a eccentric position with respect to the shutter disk (1) and to the valve seat (2).

37. A membrane valve according to claims 35 or 36, **characterised in that** at least the shutter disk (1) and/or the valve seat (2) have a symmetrical or asymmetrical elongated shape in two directions that are diametral opposite with reference to a clamping pin (201) and/or to the corresponding housing hole thereof and which directions are at least transversal, particularly perpendicular to the orientation of the retaining means, that is of the lines or bands for resting the retaining means on the shutter disk.

38. A membrane valve according to one or more of the preceding claims 35 to 37, **characterised in that** the shutter disk (1) has an elliptical, an oval shape or similar shape, the retaining means being oriented in such a way to have lines or bands for resting on the shutter disk (1) which are oriented according to the minor axis of the shutter disk (1) itself and/or of the valve seat (2).

39. A membrane valve according to one or more of the preceding claims 10 to 38, **characterised in that** the shutter disk (1) and/or the valve seat (2) have peripheral extension lobes symmetric or asymmetric with respect to the retaining means (3, 201) and/or to the clamping pin or pins (201) and/or to the housing hole or holes thereof.

40. A second stage for reducing the pressure in two stage regulators for underwater use, comprising a chamber (110) for supplying a gas or a gas mixture, that can be breathed by a mouthpiece (210) communicating with said chamber (110), which chamber (110) has an inlet connected to a first stage for reducing the pressure that is connected to a gas or gas mixture source that can be breathed at high pressure, particularly a bottle, by means of a valve that is operable in the opening position by the respiration in depression and in the closing position by the strength of a closing spring and which chamber has in a partition wall (310) between said chamber (110) and the outside at least a valve (2) for the outflow of the breathed out air, which outflow valve (2) is a membrane valve, **characterised in that** said membrane valve (2) is fabricated according to one or more of the preceding claims 1 to 39.

41. A second reduction stage according to claim 40, **characterised in that** the valve (2) for the outflow of the breathed out air is housed inside an outflow tubular duct (11) formed on one side by the wall (310) of the supplying chamber (110) wherein it is provided the outflow valve (2) itself and by a profiled member (111) with arched section that is fixed or fixable in a removable way at least partially above said wall (310) and covering completely said wall (310) towards the outside, which tubular member (111, 211) has at least one of the two head ends or both the head ends opened towards the outside, the stop rib (3) being formed by an intermediate transversal wall of said profiled member with arched section (111, 211).

42. A second reduction stage according to claims 10 and 41, **characterized in that** the transversal intermediate wall extends or ends at least with its free edge (103) in coincidence with an axis coincident with the clamping pin (201) of the shutter disk (1) and/or with the housing hole thereof of the valve seat (2).

43. A second reduction stage according to claims 11 to 42, **characterised in that** the transversal intermediate wall constitutes the stop rib (3) and extends in the direction of the shutter disk (1) and has a free stop edge (103) that adheres without pressing against said shutter disk (1) in non-operating condition, i.e. in closing condition of the valve (2).

44. A second reduction stage according to one or more of the preceding claims 40 to 43, **characterized in that** the wall (310), wherein the outflow valve (2) is provided, is arranged below the mouthpiece (210), with reference to the position of use of the second stage and to the vertical position of the user and the outflow duct (11) is oriented transversal to the axis of the mouthpiece (210) substantially according a direction such that the head openings of the outflow duct (11) are provided at the two sides of the vertical median plane containing the axis of the mouthpiece (210) and at two sides in a substantially coincident position or in a position displaced more towards the outside with respect to the user mouth.

45. A second reduction stage according to one or more of the preceding claims 41 to 44, **characterized in that** the wall (310) of the supplying chamber (110) wherein the outflow valve (2) is provided is constituted by a flattening of the peripheral wall of the supplying chamber (110) with an inclined orientation with respect to the axis of the mouthpiece (210).

46. A second reduction stage according to one or more of the preceding claims 41 to 45, **characterised in that** the shutter disk (1) and/or the valve seat (2) have an elongated shape in direction of the axis of the outflow duct (11) and in direction of at least one or both the head openings of said outflow duct.

47. A second reduction stage according to claims 10 and 46, **characterised in that** the shutter disk (1) and/or the valve seat (2) have an elliptic or substantially elliptic shape or a slot-like shape with semicircular ends, the major axis being oriented parallel to the axis of the outflow duct (11) and the transversal wall forming the stop rib (3) being coincident with the minor axis coincident with the clamping pin (201) of the shutter disk (1) and/or with the housing hole thereof in the valve seat (2).

48. A second reduction stage according to one or more of the preceding claims 10, 40 to 47, **characterised in that** the shutter disk (1) and/or the valve seat (2) have an elliptic or substantially elliptic shape or a slot-like shape with semicircular ends, the major axis being oriented parallel to the axis of the outflow duct (11) and the transversal wall being provided with a branch to form two stop ribs extending parallel one with respect to the other and symmetrically or asymmetrically with respect to the minor axis coincident with the clamping pin (201) of the shutter disk (1) and/or with the housing hole thereof in the valve seat (2) or two transversal walls being provided parallel one with respect to the other.

## Patentansprüche

1. Membranventil, das Folgendes umfasst:
- eine Verschlussscheibe (1) aus flexiblem elastischem Material, die mit einem Ventilsitz (2) zusammenwirkt und mindestens eine Durchgangsöffnung (302) umfasst, die in einer Wand (202) bereitgestellt ist,
- die genannte Verschlussscheibe (1) Mittel (201) zum Festklemmen an dem Ventilsitz (2) umfasst, wobei dieses Klemmmittel zumindest in ein komplementäres Klemmgehäuse (102) des Ventilsitzes (2) eingreifen,
- der genannte Ventilsitz (2) eine durchgehende Fläche umfasst, die auf sich selbst geschlossen ist und in abdichtendem Kontakt mit mindestens einer entsprechenden peripheren Dichtlippe (101) der Verschlussscheibe (1) steht,
- die genannte Kontaktfläche zwischen dem Ventilsitz (2) und der Dichtlippe (101) der Verschlussscheibe (1) und die genannte Dichtlippe mindestens eine Durchgangsöffnung (302) umgeben und mit Haltemitteln (3, 201) auf der Verschlussscheibe versehen ist, wobei diese Mittel sich gegen den Ventilsitz (2) zumindest entlang einer Linie oder einem Band befindet, die bzw. das sich entlang einer Sekante der Verschlussscheibe (1) erstreckt,
**dadurch gekennzeichnet, dass** die genannten Haltemittel (3, 201) der Verschlussscheibe (1) gegen den Ventilsitz (2) entlang zwei unterschiedlichen Linien oder zwei unterschiedlichen Bändern wirken, die in Sekantenstellung zu der Verschlussscheibe (1) stehen, die sich zumindest für einen Teil ihrer Länge oder für ihre gesamte Länge parallel zueinander erstrecken.

2. Membranventil nach Anspruch 1, **dadurch gekennzeichnet, dass** die Haltemittel (3, 201) der Verschlussscheibe (1) gegen den Ventilsitz (2) für eine Teil der Erstreckung entlang der Verschlussscheibe (1) entlang einer einzigen oder gemeinsamen Sekantenlinie oder einem einzigen oder gemeinsamen Sekantenband und für den restlichen Teil der Erstreckung der Verschlussscheibe entlang zwei unterschiedlichen Linien oder Bändern wirken, die in Sekantenstellung zu der Verschlussscheibe (1) stehen.

3. Membranventil nach Anspruch 1 oder 2, **dadurch gekennzeichnet, dass** die Haltemittel (3, 201) der Verschlussscheibe auf einer Sekantenlinie oder einem Sekantenband wirken, die bzw. das mit einer Median- oder diametralen Achse der Verschlussscheibe (1) zusammenfällt.

4. Membranventil nach Anspruch 1 oder 2, **dadurch gekennzeichnet, dass** die Haltemittel (3, 201) der Verschlussscheibe (1) auf einer Sekantenlinie oder einem Sekantenband wirken, die bzw. das mit einer Achse zusammenfällt, die in Bezug auf eine parallele Median- oder diametrale Achse der Verschlussscheibe seitlich versetzt ist.

5. Membranventil nach Anspruch 1 oder 2, **dadurch gekennzeichnet, dass** die Haltemittel (3, 201) der Verschlussscheibe auf zwei unterschiedlichen Sekantenlinien oder -bändern wirken, die in Bezug auf eine parallele Median- oder diametrale Achse der Verschlussscheibe (1) symmetrisch angeordnet sind.

6. Membranventil nach Anspruch 1 oder 2, **dadurch gekennzeichnet, dass** die Haltemittel (3, 201) der Verschlussscheibe auf zwei unterschiedlichen Sekantenlinien oder -bändern wirken, die in Bezug auf eine parallele Median- oder diametrale Achse der Verschlussscheibe (1) asymmetrisch angeordnet sind, die bzw. das eine auf einer Seite und die bzw. das andere auf der gegenüberliegenden Seite oder beide auf einer einzigen Seite.

7. Membranventil nach einem oder mehreren der vorhergehenden Ansprüche, **dadurch gekennzeichnet, dass** die Haltemittel (3, 201) der Verschlussscheibe (1) in einer kontinuierlichen oder diskontinuierlichen Weise mit der Verschlussscheibe (1) zusammenwirken.

8. Ventil nach einem oder mehreren der vorhergehenden Ansprüche, **dadurch gekennzeichnet, dass** die Haltemittel aus einer Stopprippe (3) bestehen, wobei diese Rippe (3) im geschlossenen Zustand des Ventils ohne Drücken gegen die Seite der Verschlussscheibe gegenüber dem Ventilsitz (2) aufsitzt.

9. Ventil nach Anspruch 8, **dadurch gekennzeichnet, dass** die Stopprippe (3) eine Aufsitzkante aufweist, wobei diese Aufsitzkante der Stopprippe (3) mit der Verschlussscheibe (1) zusammenwirkt und kontinuierlich oder diskontinuierlich, kamm- oder zahnförmig ist.

10. Ventil nach einem oder mehreren der vorhergehenden Ansprüche, **dadurch gekennzeichnet, dass** die Verschlussscheibe mindestens einen zentralen Klemmzapfen (201) aufweist, der durch elastisches Zwängen in ein entsprechendes Gehäuseloch in einer zentralen Nabe (102) des Ventilsitzes in Eingriff gebracht werden kann, wobei die Stopprippe mit der Fläche ausgerichtet ist, die in Kontakt mit der Verschlussscheibe (1) steht, die sich entlang einer Linie oder einem Band erstreckt, die bzw. das sich mit der Achse des genannten Klemmzapfens (201) kreuzt oder in Bezug auf die genannte Linie oder das genannte Band, die bzw. das sich mit der Achse des genannten Klemmzapfens (201) kreuzt, seitlich versetzt ist.

11. Membranventil nach den Ansprüchen 8 und 10, **dadurch gekennzeichnet, dass** es mindestens zwei Klemmzapfen aufweist, die voneinander beabstandet sind, wobei die Stopprippe mit der Fläche ausgerichtet ist, die in Kontakt mit der Verschlussscheibe (1) steht, die sich entlang einer Linie oder einem Band erstreckt, die bzw. das in Bezug auf die ideale gerade Linie, die sich an die Achse der zwei Klemmzapfen anfügt, quer oder orthogonal ist.

12. Membranventil nach den Ansprüchen 8 und 10, **dadurch gekennzeichnet, dass** es mindestens zwei Klemmzapfen aufweist, die voneinander beabstandet sind, wobei die Stopprippe mit der Fläche ausgerichtet ist, die in Kontakt mit der Verschlussscheibe (1) steht, die sich entlang einer Linie oder einem Band erstreckt, die bzw. das in Bezug auf die ideale gerade Linie, die sich mit der Achse der zwei Klemmzapfen verbindet, mit dieser zusammenfällt oder zu dieser parallel ist.

13. Membranventil nach einem oder mehreren der vorhergehenden Ansprüche 8 bis 12, **dadurch gekennzeichnet, dass** es eine Stopprippe (3) aufweist, die sich an einem Zwischenpunkt ihrer Erstreckung entlang der Verschlussscheibe (1) in mindestens zwei auseinander laufende symmetrische oder asymmetrische Stopprippenabzweigungen verzweigt.

14. Membranventil nach Anspruch 13, **dadurch gekennzeichnet, dass** die zwei auseinander laufenden Stopprippenabzweigungen sich weiter mit zwei zusammenlaufenden Abzweigungen erstrecken und sich wieder in einer einzigen Stopprippenabzweigung verbinden.

15. Membranventil nach den Ansprüchen 10, 13 und 14, **dadurch gekennzeichnet, dass** die zwei auseinander laufenden Abzweigungen und die zwei zusammenlaufenden Erstreckungsabzweigungen davon den Befestigungsbereich zwischen dem Klemmzapfen (201) und der Verschlussscheibe (1) umgeben.

16. Membranventil nach einem oder mehreren der vorhergehenden Ansprüche 8 bis 15, **dadurch gekennzeichnet, dass** es zwei Stopprippen (3, 3') aufweist, die parallel zueinander und beabstandet voneinander sind und mit der Verschlussscheibe (1) entlang zwei unterschiedlichen Sekantenlinien oder -bändern der Verschlussscheibe (1) selbst zusammenwirken.

17. Membranventil nach den Ansprüchen 10 und 16, **dadurch gekennzeichnet, dass** die zwei Stopprippen in Bezug auf den Klemmzapfen (201) der Verschlussscheibe symmetrisch angeordnet sind.

18. Membranventil nach Anspruch 16, **dadurch gekennzeichnet, dass** die zwei Stopprippen in einer asymmetrischen Weise in Bezug auf die Verschlussscheibe eine auf einer Seite und die bzw. das andere auf der gegenüberliegenden Seite des Klemmzapfens (201) der Verschlussscheibe angeordnet sind.

19. Membranventil nach den Ansprüchen 10 und 16, **dadurch gekennzeichnet, dass** die zwei Stopprippen beide auf derselben Seite des Klemmzapfens (201) der Verschlussscheibe (1) angeordnet sind.

20. Membranventil nach Anspruch 16, **dadurch gekennzeichnet, dass** es mindestens zwei Klemmzapfen umfasst, die voneinander beabstandet sind, wobei die zwei Stopprippen zwischen den zwei Klemmzapfen angeordnet sind und quer oder orthogonal in Bezug auf die gerade Linie, die sich mit der Achse davon verbindet, ausgerichtet sind.

21. Membranventil nach Anspruch 20, **dadurch gekennzeichnet, dass** die zwei Stopprippen in Bezug auf die zwei Klemmzapfen symmetrisch oder asymmetrisch angeordnet sind.

22. Membranventil nach Anspruch 16, **dadurch gekennzeichnet, dass** die Verschlussscheibe zwei Klemmzapfen aufweist, wobei eine Stopprippe zusammenfallend mit jedem der Klemmzapfen vorgesehen ist.

23. Membranventil nach Anspruch 16, **dadurch gekennzeichnet, dass** es zwei Klemmzapfen aufweist, wobei die zwei Stopprippen in Bezug auf die gerade Linie, die sich mit der Achse der zwei Klemmzapfen verbindet, parallel angeordnet ist, wobei die Achse in Bezug auf die gerade Linie symmetrisch oder asymmetrisch ist.

24. Membranventil nach einem oder mehreren der vorhergehenden Ansprüche 8 bis 23, **dadurch gekennzeichnet, dass** die genannte Rippe oder die genannten Rippen (3, 3') eine Aufsitzkante gegen die Verschlussscheibe aufweist bzw. aufweisen, wobei diese Aufsitzkante dünn ausgefertigt wird und eine abschließende, nicht spitze Ecke aufweist.

25. Membranventil nach einem oder mehreren der vorhergehenden Ansprüche 8 bis 24, **dadurch gekennzeichnet, dass** sich die genannte mindestens eine oder beide Stopprippen in Kontakt mit der Verschlussscheibe (1) in einer kontinuierlichen oder diskontinuierlichen Weise für die gesamte Erstreckung davon oder nur für einen Teil oder an Teilabschnitten der Verschlussscheibenerstreckung entlang der Stopprippe bzw. den Stopprippen erstrecken, wobei die genannten Teilabschnitte voneinander beabstandet sind.

26. Membranventil nach einem oder mehreren der vorhergehenden Ansprüche 8 bis 25, **dadurch gekennzeichnet, dass** mindestens eine oder beide Stopprippen von einer Brücke gebildet wird bzw. werden, die die Form eines umgedrehten U hat, dessen abschließende Beine mit dem Ventilkörper verbunden sind, wobei bei der Ventilsitz (2) an Punkten vorgesehen ist, die in Bezug auf den Ventilsitz (2) und die periphere Dichtkante der Verschlussscheibe (1) extern ist.

27. Membranventil nach einem oder mehreren der vorhergehenden Ansprüche, **dadurch gekennzeichnet, dass** die Haltemittel zum Teil aus einer Reihe Stoppzapfen (201') bestehen, die sich von der Verschlussscheibe (1) entfernen und in entsprechenden Gehäuselöchern in einer Traverse, die sich mit der Durchgangsöffnung (302) kreuzt, in Eingriff gebracht werden kann oder in diese eingreift.

28. Membranventil nach den Ansprüchen 10 und 27, **dadurch gekennzeichnet, dass** die Reihe von Stoppzapfen (201') mit dem Klemmzapfen (201) der Verschlussscheibe (1) zusammenfällt, wobei dieser Klemmzapfen (201) einen der Stoppzapfen bildet, die Traverse, die sich mit der Durchgangsöffnung (302) des Ventilsitzes kreuzt, von einem radialen Arm zum Stützen einer zentralen Nabe (102) des Ventilsitzes gebildet wird, in der ein Eingriffsloch des Klemmzapfens (201) selbst vorgesehen ist.

29. Ventil nach den Ansprüchen 10 und 27, **dadurch gekennzeichnet, dass** die Reihe von Stoppzapfen (201') sich in Bezug auf den Klemmzapfen (201) seitlich versetzt erstreckt.

30. Membranventil nach einem oder mehreren der Ansprüche 10, 27 bis 29, **dadurch gekennzeichnet, dass** es zwei Reihen von Stoppzapfen (201') umfasst, die auf parallelen Linien zueinander angeordnet und in Bezug auf den Klemmzapfen (201') symmetrisch oder asymmetrisch sind.

31. Membranventil nach einem oder mehreren der Ansprüche 10, 27 bis 30, **dadurch gekennzeichnet, dass** es zwei Klemmzapfen umfasst, die voneinander beabstandet sind, wobei mit jedem Klemmzapfen mindestens eine Reihe oder zwei Reihen von Stoppzapfen in Verbindung stehen, wobei diese Reihen sich in Bezug auf die gerade Linie, die sich mit der Achse der zwei Klemmzapfen verbindet, quer oder senkrecht erstrecken.

32. Membranventil nach einem oder mehreren der Ansprüche 10, 27 bis 30, **dadurch gekennzeichnet, dass** es zwei Klemmzapfen umfasst, die voneinander beabstandet, wobei ein oder zwei Reihen von Stoppzapfen parallel zu der geraden Linie, die sich mit der Achse der zwei Klemmzapfen (201) verbindet, ausgerichtet vorgesehen sind.

33. Membranventil nach einem oder mehreren der vorhergehenden Ansprüche, **dadurch gekennzeichnet, dass** es zwei getrennte Haltemittel umfasst, die entlang zwei unterschiedlichen Linien oder Bändern wirken, die in Sekantenstellung zu der Verschlussscheibe stehen, und wobei die genannten Haltemittel eines von mindestens einer Stopprippe und das andere von mindestens einer Reihe von Stoppzapfen gebildet werden.

34. Membranventil nach einem oder mehreren der vorhergehenden Ansprüche 10 bis 33, **dadurch gekennzeichnet, dass** zumindest die Verschlussscheibe (1) und/oder der Ventilsitz (2) eine Kreisform oder eine Form aufweisen, die in einem Kreis in Bezug auf den Klemmzapfen (201) und/oder das Gehäuseloch davon einbeschrieben werden können.

35. Membranventil nach einem oder mehreren der vorhergehenden Ansprüche 10 bis 33, **dadurch gekennzeichnet, dass** zumindest die Verschlussscheibe (1) und/oder der Ventilsitz (2) eine Form, die keine Kreisform ist, oder eine Form aufweisen, die nicht in einem Kreis in Bezug auf den Klemmzapfen (201) und/oder das Gehäuseloch davon einbeschrieben werden können.

36. Membranventil nach Anspruch 35, **dadurch gekennzeichnet, dass** in Bezug auf den Klemmzapfen (201) und/oder das Gehäuseloch davon zumindest die Verschlussscheibe (1) und/oder der Ventilsitz (2) eine rotationsasymmetrische Form aufweisen, das heißt, der Klemmzapfen (201) und/oder das Gehäuseloch davon sind in einer exzentrischen Stellung in Bezug auf die Verschlussscheibe (1) und/oder den Ventilsitz (2).

37. Membranventil nach den Ansprüchen 35 oder 36, **dadurch gekennzeichnet, dass** mindestens die Verschlussscheibe (1) und/oder der Ventilsitz (2) eine symmetrische oder asymmetrische verlängerte Form in zwei Richtungen aufweisen, die in Bezug auf einen Klemmzapfens (201) und/oder das entsprechende Gehäuseloch davon diametral gegenüberliegend sind, und wobei diese Richtungen zumindest quer, insbesondere senkrecht zu der Ausrichtung der Haltemittel, das heißt der Linien oder Bänder zum Aufsitzen der Haltemittel auf der Verschlussscheibe sind.

38. Membranventil nach einem oder mehreren der vorhergehenden Ansprüche 35 bis 37, **dadurch gekennzeichnet, dass** die Verschlussscheibe (1) eine elliptische Form, eine ovale Form oder eine ähnliche Form aufweist, wobei die Haltemittel derart ausgerichtet sind, dass sie Linien oder Bänder zum Aufsitzen auf der Verschlussscheibe (1) aufweisen, die entsprechend der Nebenachse der Verschlussscheibe (1) selbst und/oder des Ventilsitzes (2) ausgerichtet sind.

39. Membranventil nach einem oder mehreren der vorhergehenden Ansprüche 10 bis 38, **dadurch gekennzeichnet, dass** die Verschlussscheibe (1) und/oder der Ventilsitz (2) periphere Erstreckungsflügel aufweisen, die in Bezug auf die Haltemittel (3, 201) und/oder den Klemmzapfen oder die Klemmzapfen (201) und/oder das Gehäuseloch oder die Gehäuselöcher davon symmetrisch oder asymmetrisch sind.

40. Zweite Stufe zur Reduzierung des Drucks in zweistufigen Atemreglern zur Unterwasserverwendung, die eine Kammer (110) zum Zuführen von Gas oder einem Gasgemisch umfasst, das durch ein Mundstück (210) eingeatmet werden kann, das mit der genannten Kammer (110) in Verbindung steht, wobei diese Kammer (110) einen Einlass aufweist, der mit einer ersten Stufe zur Reduzierung des Drucks verbunden ist, die mit einer Gas- oder Gasgemischquelle, die bei hohem Druck eingeatmet werden kann, insbesondere einer Flasche mittels eines Ventils verbunden ist, das in der Öffnungsstellung durch die Atmung in Unterdruck und in der Schließstellung durch die Kraft einer Schließfeder betätigt werden kann, und wobei diese Kammer in einer Trennwand (310) zwischen der genannten Kammer (110) und der Außenseite mindestens ein Ventil (2) zum Ausströmen der ausgeatmeten Luft aufweist, wobei es sich bei diesem Ausströmventil (2) um ein Membranventil handelt, **dadurch gekennzeichnet, dass** das Membranventil (2) nach einem oder mehreren der vorhergehenden Ansprüche 1 bis 39 hergestellt wird.

41. Zweite Reduzierstufe nach Anspruch 40, **dadurch gekennzeichnet, dass** das Ventil (2) zum Ausströmen des ausgeatmeten Luft in einem schlauchartigen Ausströmkanal (11) beherbergt ist, der auf einer Seite von der Wand (310) der Zuführkammer (110), in der das Ausströmventil (2) selbst vorgesehen ist, und von einem Profilelement (111) mit gewölbtem Abschnitt gebildet wird, das auf abnehmbare Weise zumindest zum Teil über der genannten Wand (310) befestigt ist oder befestigt werden kann und die genannte Wand (310) zur Außenseite hin vollständig bedeckt, wobei das schlauchartige Element (111, 211) mindestens eines der zwei Kopfenden oder beide Kopfenden zur Außenseite hin geöffnet aufweist, wobei die Stopprippe (3) von einer Zwischenquerwand des genannten Profilelements mit gewölbtem Abschnitt (111, 211) gebildet wird.

42. Zweite Reduzierstufe nach den Ansprüchen 10 und 41, **dadurch gekennzeichnet, dass** die Zwischenquerwand sich zumindest mit ihrer freien Kante (103) im Zusammenfallen mit einer Achse, die mit dem Klemmzapfen (201) der Verschlussscheibe (1) und/oder mit dem Gehäuseloch davon des Ventilsitzes (2) zusammenfällt, erstreckt oder damit abschließt.

43. Zweite Reduzierstufe nach den Ansprüchen 11 bis 42, **dadurch gekennzeichnet, dass** die Zwischenquerwand die Stopprippe (3) darstellt und sich in der Richtung der Verschlussscheibe (1) erstreckt und eine freie Stoppkante (103) aufweist, die ohne Drücken gegen die genannte Verschlussscheibe (1) im nicht betätigten Zustand, d. h. im Schließzustand des Ventils (2), anhaftet.

44. Zweite Reduzierstufe nach einem oder mehreren der vorhergehenden Ansprüche 40 bis 43, **dadurch gekennzeichnet, dass** die Wand (310), in der das Ausströmventil (2) vorgesehen ist, unter dem Mundstück (210) in Bezug auf die Verwendungsstellung der zweiten Stufe und der vertikalen Stellung des Benutzers angeordnet ist und der Ausströmkanal (11) quer zur Achse des Mundstücks (210) im Wesentlichen gemäß einer Richtung ausgerichtet ist, so dass die Kopföffnungen des Ausströmkanals (11) zu beiden Seiten der vertikalen Medianebene, die die Achse des Mundstücks (210) enthält, und zu beiden Seiten in einer im Wesentlichen zusammenfallenden Stellung oder in einer Stellung, die mehr zur Außenseite in Bezug auf den Benutzermund verschoben sind, bereitgestellt werden.

45. Zweite Reduzierstufe nach einem oder mehreren der vorhergehenden Ansprüche 41 bis 44, **dadurch gekennzeichnet, dass** die Wand (310) der Zuführkammer (110), in der das Ausströmventil (2) vorgesehen ist, von einer Abflachung der peripheren Wand der Zuführkammer (110) mit einer geneigten Ausrichtung in Bezug auf die Achse des Mundstücks (210) gebildet wird.

46. Zweite Reduzierstufe nach einem oder mehreren der vorhergehenden Ansprüche 41 bis 45, **dadurch gekennzeichnet, dass** die Verschlussscheibe (1) und/oder der Ventilsitz (2) eine verlängerte Form in Richtung der Achse des Ausströmkanals (11) und in Richtung von mindestens einer der oder beiden Kopföffnungen des genannten Ausströmkanals aufweisen.

47. Zweite Reduzierstufe nach den Ansprüchen 10 und 46, **dadurch gekennzeichnet, dass** die Verschlussscheibe (1) und/oder der Ventilsitz (2) eine elliptische oder im Wesentlichen elliptische Form oder eine langnutartige Form mit halbkreisförmigen Enden aufweisen, wobei die Hauptachse parallel zur Achse des Ausströmkanals (11) ausgerichtet ist und die Querwand, die die Stopprippe (3) bildet, mit der Nebenachse zusammenfällt, die mit dem Klemmzapfen (201) der Verschlussscheibe (1) und/oder mit dem Gehäuseloch davon in dem Ventilsitz (2) zusammenfällt.

48. Zweite Reduzierstufe nach einem oder mehreren der vorhergehenden Ansprüche 10, 40 bis 47, **dadurch gekennzeichnet, dass** die Verschlussscheibe (1) und/oder der Ventilsitz (2) eine elliptische oder im Wesentlichen elliptische Form oder eine langnutartige Form mit halbkreisförmigen Enden aufweisen, wobei die Hauptachse parallel zur Achse des Ausströmkanals (11) ausgerichtet ist und die Querwand mit einer Abzweigung versehen ist, um zwei Stopprippen zu bilden, die sich parallel zueinander und symmetrisch oder asymmetrisch in Bezug auf die Hauptachse erstrecken, die mit dem Klemmzapfen (201) der Verschlussscheibe (1) und/oder mit dem Gehäuseloch davon in dem Ventilsitz (2) zusammenfällt, oder zwei Querwände parallel zueinander vorgesehen sind.

## Revendications

1. Vanne à membrane comprenant:
- un disque obturateur (1) en matériau élastique flexible coopérant avec un siège de vanne (2) comprenant au moins une ouverture de passage (302) ménagée dans une paroi (202),
- ledit disque obturateur (1) comprend des moyens (201) pour le serrage au siège de vanne (2), lesdits moyens de serrage étant engagés au moins dans un boîtier de serrage complémentaire (102) du siège de vanne (2),
- ledit siège de vanne (2) comprend une surface continue et fermée sur elle-même, qui est en contact étanche avec au moins une lèvre d'étanchéité périphérique correspondante (101) du disque obturateur (1),
- ladite surface de contact entre le siège de vanne (2) et la lèvre d'étanchéité (101) du disque obturateur (1) et ladite lèvre d'étanchéité entourent au moins une ouverture de passage (62), et étant munie de moyens de retenue (3, 201) sur le disque obturateur, lesdits moyens sont situés contre le siège de vanne (2) au moins le long d'une ligne ou d'une bande s'étendant le long d'une sécante du disque obturateur (1) lui-même,
**caractérisée en ce que** lesdits moyens de retenue (3, 201) du disque obturateur (1) contre le siège de vanne (2) opèrent le long de deux lignes différentes ou de deux bandes différentes sécant le disque obturateur (1) s'étendant au moins sur une partie de leur longueur ou sur toute leur longueur parallèlement l'une par rapport à l'autre.

2. Vanne à membrane selon la revendication 1, **caractérisée en ce que** les moyens de retenue (3, 201) du disque obturateur (1) contre le siège de vanne (2) opèrent pour une partie de l'extension le long du disque obturateur (1), le long d'une ligne ou bande sécante unique ou commune et pour la partie restante de l'extension du disque obturateur le long de deux lignes ou bandes différentes qui sont sécantes au disque obturateur (1).

3. Vanne à membrane selon les revendications 1 ou 2, **caractérisée en ce que** les moyens de retenue (3, 201) du disque obturateur opèrent sur une ligne ou bande sécante coïncidant avec un axe médian ou diamétral du disque obturateur (1).

4. Vanne à membrane selon les revendications 1 ou 2, **caractérisée en ce que** les moyens de retenue (3, 201) du disque obturateur (1) opèrent sur une ligne ou bande sécante coïncidant avec un axe qui est latéralement décalé par rapport à un axe médian ou diamétral parallèle du disque obturateur.

5. Vanne à membrane selon les revendications 1 ou 2, **caractérisée en ce que** les moyens de retenue (3, 201) du disque obturateur opèrent sur deux lignes ou bandes sécantes différentes qui sont agencées symétriquement par rapport à un axe médian ou diamétral parallèle du disque obturateur (1).

6. Vanne à membrane selon les revendications 1 ou 2, **caractérisée en ce que** les moyens de retenue (3, 201) du disque obturateur opèrent sur deux lignes ou bandes sécantes différentes qui sont agencées asymétriquement, l'une sur un côté et l'autre sur le côté opposé ou les deux sur un seul côté par rapport à un axe médian ou diamétral parallèle du disque obturateur (1).

7. Vanne à membrane selon une ou plusieurs des revendications précédentes, **caractérisée en ce que** les moyens de retenue (3, 201) du disque obturateur (1) coopèrent d'une manière continue ou discontinue avec le disque obturateur (1).

8. Vanne selon une ou plusieurs des revendications précédentes, **caractérisée en ce que** les moyens de retenue sont constitués d'une nervure d'arrêt (3), ladite nervure (3), à l'état fermé de la vanne, reste sans exercer de pression sur le côté du disque obturateur opposé au siège de vanne (2).

9. Vanne selon la revendication 8, **caractérisée en ce que** la nervure d'arrêt (3) possède un bord de repos, ledit bord de repos de la nervure d'arrêt (3) coopère avec le disque obturateur (1) et est continu ou discontinu en forme de peigne ou de dents.

10. Vanne selon une ou plusieurs des revendications précédentes, **caractérisée en ce que** le disque obturateur possède au moins un axe de serrage central (200) qui peut être mis en prise par une force élastique dans un trou de logement correspondant dans un moyeu central (102) du siège de vanne, la nervure d'arrêt étant orientée avec la surface en contact avec le disque obturateur (1) s'étendant le long d'une ligne ou d'une bande se croisant avec l'axe dudit axe de serrage (201) ou décalée latéralement par rapport à ladite ligne ou bande se croisant avec l'axe dudit axe de serrage (201).

11. Vanne à membrane selon les revendications 8 et 10, **caractérisée en ce qu'**elle possède au moins deux axes de serrage espacés l'un de l'autre, la nervure d'arrêt étant orientée avec la surface en contact avec le disque obturateur (1) s'étendant le long d'une ligne ou d'une bande transversale ou orthogonale par rapport à la ligne droite idéale qui joint l'axe des deux axes de serrage.

12. Vanne à membrane selon les revendications 8 et 10, **caractérisée en ce qu'**elle possède au moins deux axes de serrage espacés l'un de l'autre, la nervure d'arrêt étant orientée avec la surface en contact avec le disque obturateur (1) s'étendant le long d'une ligne ou d'une bande coïncidant ou parallèle par rapport à la ligne droite idéale qui joint l'axe des deux axes de serrage.

13. Vanne à membrane selon une ou plusieurs des revendications précédentes 8 à 12, **caractérisée en ce qu'**elle possède une nervure d'arrêt (3) qui, à un point intermédiaire de son extension le long du disque obturateur (1), se sépare en au moins deux branches de nervure d'arrêt symétriques ou asymétriques divergentes.

14. Vanne à membrane selon la revendication 13, **caractérisée en ce que** les deux branches de nervure d'arrêt divergentes s'étendent en outre avec deux branches convergentes et se rejoignent en une brande de nervure d'arrêt unique.

15. Vanne à membrane selon les revendications 10, 13 et 14, **caractérisée en ce que** les deux branches divergentes et les deux branches d'extension convergentes de celles-ci entourent la zone de fixation entre l'axe de serrage (201) et le disque obturateur (1).

16. Vanne à membrane selon une ou plusieurs des revendications précédentes 8 à 15, **caractérisée en ce qu'**elle possède deux nervures d'arrêt (3, 3') parallèles et espacées l'une par rapport à l'autre et coopérant avec le disque obturateur (1) le long de deux lignes ou bandes sécantes différentes du disque obturateur (1) lui-même.

17. Vanne à membrane selon les revendications 10 et 16, **caractérisée en ce que** les deux nervures d'arrêt sont agencées symétriquement par rapport à l'axe de serrage (201) du disque obturateur.

18. Vanne à membrane selon la revendication 16, **caractérisée en ce que** les deux nervures d'arrêt sont agencées une sur un côté et l'autre sur le côté opposé de l'axe de serrage (201) du disque obturateur d'une manière asymétrique par rapport au disque obturateur.

19. Vanne à membrane selon les revendications 10 et 16, **caractérisée en ce que** les deux nervures d'arrêt sont toutes les deux agencées sur le même côté de l'axe de serrage (201) du disque obturateur (1).

20. Vanne à membrane selon la revendication 16, **caractérisée en ce qu'**elle comprend au moins deux axes de serrage espacés l'un par rapport à l'autre, les deux nervures d'arrêt étant agencées entre les deux axes de serrage et orientées transversalement ou orthogonalement par rapport à la ligne droite qui rejoint l'axe de celles-ci.

21. Vanne à membrane selon la revendication 20, **caractérisée en ce que** les deux nervures d'arrêt sont agencées symétriquement ou asymétriquement par rapport aux deux axes de serrage.

22. Vanne à membrane selon la revendication 16, **caractérisée en ce que** le disque obturateur possède deux axes de serrage, une nervure d'arrêt étant réalisée de manière coïncidente avec chacun des deux axes de serrage.

23. Vanne à membrane selon la revendication 16, **caractérisée en ce qu'**elle possède deux axes de serrage, les deux nervures d'arrêt étant agencées parallèlement par rapport à la ligne droite qui rejoint l'axe des deux axes de serrage, symétriquement ou asymétriquement par rapport à la ligne droite.

24. Vanne à membrane selon une ou plusieurs des revendications précédentes 8 à 23, **caractérisée en ce que** la ou les nervures précitées (3, 3') ont un bord de repos contre le disque obturateur, ledit bord de repos étant mince et possédant un coin terminal non tranchant.

25. Vanne à membrane selon une ou plusieurs des revendications précédentes 8 à 24, **caractérisée en ce que** ladite au moins une ou les deux nervures d'arrêt s'étendent en contact avec le disque obturateur (1) d'une manière continue ou discontinue sur toute l'extension de celles-ci ou seulement pour une partie ou à des sections partielles de l'extension du disque obturateur le long de la ou des nervures d'arrêt, lesdites sections partielles étant espacées les unes des autres.

26. Vanne à membrane selon une ou plusieurs des revendications précédentes 8 à 25, **caractérisée en ce qu'**au moins une ou les deux nervures d'arrêt sont formées par un pont ayant la forme d'un U inversé dont les branches terminales sont jointes au corps de vanne, où le siège de vanne (2) est réalisé à des points qui sont externes par rapport audit siège de vanne (2) et au bord d'étanchéité périphérique du disque obturateur (1).

27. Vanne à membrane selon une ou plusieurs des revendications précédentes, **caractérisée en ce que** les moyens de retenue sont partiellement constitués d'une rangée d'axes d'arrêt (201') partant du disque obturateur (1) et pouvant être mis en prise ou bien en prise avec des trous de logement correspondants dans une traverse qui se croise avec l'ouverture (302) du passage.

28. Vanne à membrane selon les revendications 10 et 27, **caractérisée en ce que** la rangée d'axes d'arrêt (201') coïncide avec l'axe de serrage (201) du disque obturateur (1), ledit axe de serrage (201) constitue un des axes d'arrêt, la traverse qui se croise avec l'ouverture (302) du passage du siège de vanne étant formée par un bras radial pour supporter un moyeu central (102) du siège de vanne dans lequel est réalisé un trou d'engagement de l'axe de serrage (201) lui-même.

29. Vanne selon les revendications 10 et 27, **caractérisée en ce que** la rangée d'axes d'arrêt (201') s'étend d'une manière latéralement décalée par rapport à l'axe de serrage (201).

30. Vanne à membrane selon une ou plusieurs des revendications 10, 27 à 29, **caractérisée en ce qu'**elle comprend deux rangées d'axe d'arrêt (201') agencées sur des lignes parallèles l'une par rapport à l'autre et symétriques ou asymétriques par rapport à l'axe de serrage (201').

31. Vanne à membrane selon une ou plusieurs des revendications 10, 27 à 30, **caractérisée en ce qu'**elle comprend deux axes de serrage espacés l'un de l'autre, à chaque axe de serrage étant associée au moins une rangée ou deux rangées d'axes de serrage, lesdites rangées s'étendent transversalement ou perpendiculairement par rapport à la ligne droite qui rejoint l'axe des deux axes de serrage.

32. Vanne à membrane selon une ou plusieurs des revendications 10, 27 à 30, **caractérisée en ce qu'**elle comprend deux axes de serrage espacés l'un de l'autre, une ou deux rangées d'axes d'arrêt étant réalisées en étant orientées parallèlement à la ligne droite qui rejoint l'axe des deux axes de serrage (201).

33. Vanne à membrane selon une ou plusieurs des revendications précédentes, **caractérisée en ce qu'**elle comprend deux moyens de retenue séparés opérant le long de deux lignes ou bandes différentes qui sont sécantes au disque obturateur, et lesdits moyens de retenue sont formés, un par au moins une nervure d'arrêt et l'autre par au moins une rangée d'axes d'arrêt.

34. Vanne à membrane selon une ou plusieurs des revendications précédentes 10 à 33, **caractérisée en ce qu'**au moins le disque obturateur (1) et/ou le siège de vanne (2) ont une forme circulaire ou bien une forme qui peut être inscrite dans un cercle par rapport à l'axe de serrage (201) et/ou son trou de logement.

35. Vanne à membrane selon une ou plusieurs des revendications précédentes 10 à 33, **caractérisée en ce qu'**au moins le disque obturateur (1) et/ou le siège de vanne (2) ont une forme non circulaire ou bien une forme qui ne peut pas être inscrite dans un cercle par rapport à l'axe de serrage (201) et/ou son trou de logement.

36. Vanne à membrane selon la revendication 35, **caractérisée en ce que**, par rapport à l'axe de serrage (201) et/ou le trou de logement de celui-ci, au moins le disque obturateur (1) et/ou le siège de vanne (2) ont une forme asymétrique en rotation, c'est-à-dire que l'axe de serrage (201) et/ou son trou de logement sont dans une position excentrique par rapport au disque obturateur (1) et au siège de vanne (2).

37. Vanne à membrane selon les revendications 35 ou 36, **caractérisée en ce qu'**au moins le disque obturateur (1) et/ou le siège de vanne (2) ont une forme symétrique ou asymétrique oblongue dans deux directions qui sont diamétralement opposées par rapport à un axe de serrage (201) et/ou son trou de logement correspondant, et lesdites directions sont au moins tranversales, en particulier perpendiculaires à l'orientation des moyens de retenue, c'est-à-dire des lignes ou bandes pour le repos des moyens de retenue sur le disque obturateur.

38. Vanne à membrane selon une ou plusieurs des revendications précédentes 35 à 37, **caractérisée en ce que** le disque obturateur (1) a une forme elliptique, une forme ovale ou similaire, les moyens de retenue étant orientés de manière à avoir des lignes ou bandes pour reposer sur le disque obturateur (1) qui sont orientées en accord avec l'axe mineur du disque obturateur (1) lui-même et/ou du siège de vanne (2).

39. Vanne à membrane selon une ou plusieurs des revendications précédentes 10 à 38, **caractérisée en ce que** le disque obturateur (1) et/ou le siège de vanne (2) ont des lobes d'extension périphériques symétriques ou asymétriques par rapport aux moyens de retenue (3, 201) et/ou à ou aux axes de serrage (201) et/ou au trou (s) de logement de ceux-ci.

40. Deuxième étage pour réduire la pression dans des régulateurs à deux étages pour une utilisation sous-marine, comprenant une chambre (110) pour fournir un gaz ou un mélange de gaz, qui peut être respiré par un embout buccal (210) communiquant avec ladite chambre (110), ladite chambre (110) ayant une entrée reliée à un premier étage pour réduire la pression, qui est connectée à une source de gaz ou de mélange de gaz qui peut être respiré à haute pression, particulièrement une bouteille, au moyen d'une vanne qui est actionnable en position d'ouverture par la respiration en dépression et dans la position de fermeture par la force d'un ressort de fermeture, et ladite chambre possède dans une paroi de séparation (310) entre ladite chambre (110) et l'extérieur au moins une vanne (2) pour l'écoulement de l'air expulsé, ladite vanne d'écoulement (2) est une vanne à membrane, **caractérisée en ce que** ladite vanne à membrane (2) est fabriquée selon une ou plusieurs des revendications précédentes 1 à 39.

41. Deuxième étage de réduction selon la revendication 40, **caractérisé en ce que** la vanne (2) pour l'écoulement de l'air expulsé est logée à l'intérieur d'un conduit tubulaire d'écoulement (11) formé sur un côté par la paroi (310) de la chambre d'alimentation (110), dans laquelle est réalisée la vanne d'écoulement (2) elle-même et par un élément profilé (111) avec une section arquée qui est fixé ou peut être fixé d'une manière amovible au moins partielle au-dessus de ladite paroi (310) et couvrant complètement ladite paroi (310) vers l'extérieur, ledit élément tubulaire (111, 211) a au moins une des deux extrémités de tête ou les deux extrémités de tête ouvertes vers l'extérieur, la nervure d'arrêt (3) étant formée par une paroi transversale intermédiaire dudit élément profilé avec la section arquée (111, 211).

42. Deuxième étage de réduction selon les revendications 10 et 41, **caractérisé en ce que** la paroi transversale intermédiaire s'étend ou se termine au moins avec son bord libre (103) en coïncidence avec un axe coïncidant avec l'axe de serrage (201) du disque obturateur (1) et/ou avec son trou de logement du siège de vanne (2).

43. Deuxième étage de réduction selon les revendications 11 à 42, **caractérisé en ce que** la paroi transversale intermédiaire constitue la nervure d'arrêt (3) et s'étend dans la direction du disque obturateur (1) et possède un bord d'arrêt libre (103) qui adhère sans exercer de pression audit disque obturateur (1) dans un état non opérant, c'est-à-dire dans un état de fermeture de la vanne (2).

44. Deuxième étage de réduction selon l'une ou plusieurs des revendications 40 à 43, **caractérisé en ce que** la paroi (310), dans laquelle la vanne d'écoulement (2) est réalisée, est agencée en dessous de l'embout buccal (210), avec référence à la position d'utilisation du deuxième étage et à la position verticale de l'utilisateur, et le conduit d'écoulement (11) est orienté transversalement à l'axe de l'embout buccal (210) sensiblement en accord avec une direction de telle sorte que les ouvertures de tête du conduit d'écoulement (11) sont réalisées aux deux côtés du plan médian vertical contenant l'axe de l'embout buccal (210) et aux deux côtés dans une position sensiblement coïncidente ou dans une position déplacée davantage vers l'extérieur par rapport à la bouche de l'utilisateur.

45. Deuxième étage de réduction selon une ou plusieurs des revendications précédentes 41 à 44, **caractérisé en ce que** la paroi (310) de la chambre d'alimentation (110) dans laquelle la vanne d'écoulement (2) est réalisée, est formée par un aplatissement de la paroi périphérique de la chambre d'alimentation (110) avec une orientation inclinée par rapport à l'axe de l'embout buccal (210).

46. Deuxième étage de réduction selon une ou plusieurs des revendications précédentes 41 à 45, **caractérisé en ce que** le disque obturateur (1) et/ou le siège de vanne (2) ont une forme oblongue dans la direction de l'axe du conduit d'écoulement (11) et dans la direction d'au moins une ou des deux ouvertures de tête dudit conduit d'écoulement.

47. Deuxième étage de réduction selon les revendications 10 et 46, **caractérisé en ce que** le disque obturateur (1) et/ou le siège de vanne (2) ont une forme elliptique ou sensiblement elliptique ou une forme semblable à une fente avec des extrémités semi-circulaires, l'axe majeur étant orienté parallèlement à l'axe du conduit d'écoulement (11), et la paroi transversale formant la nervure d'arrêt (3) coïncidant avec l'axe mineur coïncidant avec l'axe de serrage (201) du disque obturateur (1) et/ou avec son trou de logement dans le siège de vanne (2).

48. Deuxième étage de réduction selon une ou plusieurs des revendications précédentes 10, 40 à 47, **caractérisé en ce que** le disque obturateur (1) et/ou le siège de vanne (2) ont une forme elliptique ou sensiblement elliptique ou une forme semblable à une fente avec des extrémités semi-circulaires, l'axe majeur étant orienté parallèlement à l'axe du conduit d'écoulement (11), et la paroi transversale étant réalisée avec une branche pour former deux nervures d'arrêt s'étendant parallèlement l'une par rapport à l'autre et symétriquement ou asymétriquement par rapport à l'axe mineur coïncidant avec l'axe de serrage (201) du disque obturateur (1) et/ou avec son trou de logement dans le siège de vanne (2) ou bien deux parois transversales étant réalisées parallèlement l'une à l'autre.
